# EUROPEAN PATENT APPLICATION

(11) **EP 4 738 232 A1**
(43) Date of publication of application: **06.05.2026**
(21) Application number: 24831548.3
(22) Date of filing: 29.05.2024
(51) Int. Cl.: G06Q 50/10

(54) **IMAGE DATA DISTRIBUTION DEVICE, METHOD, AND PROGRAM**

(30) Priority: 30.06.2023 JP 2023108286
(71) Applicant: FUJIFILM Corporation, Tokyo 106-8620 (JP)
(72) Inventor: NAKAGAWA, Tomohiro, Saitama-shi, Saitama 331-9624 (JP); YAMAJI, Kei, Saitama-shi, Saitama 331-9624 (JP)
(74) Representative: Meissner Bolte Partnerschaft mbB
(86) International application number: PCT/JP2024/019678
(87) International publication number: WO 2025/004678

(57) **Abstract**

There are provided an image data distribution apparatus, a method, and a program capable of reducing a processing load in a case of receiving a distribution request. The image data distribution apparatus that receives the distribution request from a terminal, and distributes image data for printing to the terminal, and includes a processor. The processor acquires first information including statistical information on information on the Internet related to the image data, and sets a content of a dispersion process, based on the first information.

## Description

### BACKGROUND OF THE INVENTION

### 1. Field of the Invention

The present invention relates to an image data distribution apparatus, a method, and a program, and particularly to an image data distribution apparatus, a method, and a program that distribute image data for printing.

### 2. Description of the Related Art

JP2022-028225A describes a system in which a user of a lodging facility can order an image of an event such as a baseball game while viewing the event on a television in a room, and can purchase the image as a printed matter.

JP2020-135166A discloses a technology of selling a printed matter such as a photo online using the Internet.

JP2019-164481A discloses a technology for selling a photo of a performer at an event venue or the like, and proposes the technology in which a list of photos to be sold is presented to a customer, a vote from the customer for a photo which the customer wants to purchase is collected, and the number of prints of each photo is determined based on the voting result.

### SUMMARY OF THE INVENTION

One embodiment according to the present disclosed technology provides an image data distribution apparatus, a method, and a program capable of reducing a processing load in a case of attaching a distribution request.
(1) According to an aspect of the present invention, there is provided an image data distribution apparatus that receives a distribution request from a terminal and distributes image data for printing to the terminal, the image data distribution apparatus comprising a processor, wherein the processor is configured to: acquire first information including statistical information on information on Internet related to the image data; and set a content of a dispersion process, based on the first information.
(2) In the image data distribution apparatus according to (1), the first information includes statistical information on information on a social networking service related to the image data and/or statistical information on an access to a Web page on which information related to the image data is posted.
(3) In the image data distribution apparatus according to (1) or (2), the dispersion process is a process of dispersing the distribution request.
(4) In the image data distribution apparatus according to (3), the dispersion process is a process of sharpening an image represented by the image data over time and displaying the image on a display unit of the terminal, and the processor is configured to set a degree of sharpening of the image over time, based on the first information.
(5) In the image data distribution apparatus according to (4), the processor is configured to: acquire second information including statistical information on a distribution status of the image data; and correct the degree of sharpening of the image over time, based on the second information.
(6) In the image data distribution apparatus according to (4) or (5), in a case where the image is sharpened in stages, the processor is configured to set the number of steps for sharpening and/or a degree of sharpening in each step, based on the first information.
(7) In the image data distribution apparatus according to any one of (4) to (6), the processor is configured to: acquire third information including information on a user who provides the image data; and correct the degree of sharpening of the image over time, based on the third information.
(8) In the image data distribution apparatus according to any one of (3) to (7), the dispersion process is a process of changing a price of the image data over time, and the processor is configured to set the price, based on the first information.
(9) In the image data distribution apparatus according to (8), the processor is configured to: acquire second information including statistical information on a distribution status of the image data; and correct the price, based on the second information.
(10) In the image data distribution apparatus according to any one of (3) to (9), the dispersion process is a process of expanding the image data to be distributed, and the processor is configured to set a content to be expanded, based on the first information.
(11) In the image data distribution apparatus according to any one of (1) to (10), the dispersion process is a process of dispersing a process of receiving the distribution request.
(12) In the image data distribution apparatus according to (11), the dispersion process is a scale-out process, and the processor is configured to set a content of the scale-out process, based on the first information.
(13) In the image data distribution apparatus according to any one of (1) to (12), a printable period of the image data is limited.
(14) In the image data distribution apparatus according to any one of (1) to (13), the number of distributions of the image data is limited.
(15) According to another aspect of the present invention, there is provided an image data distribution method for receiving a distribution request from a terminal and distributing image data for printing to the terminal, the image data distribution method comprising: acquiring first information including statistical information on information on Internet related to the image data; and setting a content of a dispersion process, based on the first information.
(16) According to still another aspect of the present invention, there is provided an image data distribution program for receiving a distribution request from a terminal and distributing image data for printing to the terminal, the image data distribution program causing a computer to realize: a function of acquiring first information including statistical information on information on Internet related to the image data; and a function of setting a content of a dispersion process, based on the first information.

### BRIEF DESCRIPTION OF THE DRAWINGS

FIG. 1 is a conceptual diagram of a service for distributing image data for printing.
FIG. 2 is a schematic configuration diagram of a distribution system.
FIG. 3 is a block diagram illustrating an example of a hardware configuration of a distribution server.
FIG. 4 is a block diagram illustrating an example of a hardware configuration of a first terminal.
FIG. 5 is a block diagram illustrating an example of a hardware configuration of a second terminal.
FIG. 6 is a block diagram illustrating an example of a hardware configuration of a printer.
FIG. 7 is a block diagram of a main function of the first terminal.
FIG. 8 is a diagram illustrating an example of an operation screen in a case of uploading image data for distribution.
FIG. 9 is a diagram illustrating another example of the operation screen in the case of uploading the image data for distribution.
FIG. 10 is a diagram illustrating still another example of the operation screen in the case of uploading the image data for distribution.
FIG. 11 is a diagram illustrating still another example of the operation screen in the case of uploading the image data for distribution.
FIG. 12 is a block diagram of a main function of the second terminal.
FIG. 13 is a diagram illustrating an example of a screen display of the second terminal in a case where a notification is received.
FIG. 14 is a diagram illustrating an example of a display screen in a case where information on image data for printing that can be distributed is provided to a user.
FIG. 15 is a diagram illustrating an example of a display screen during printing.
FIG. 16 is a diagram illustrating an example of a display screen after printing completion.
FIG. 17 is a block diagram of a main function of the distribution server.
FIG. 18 is a conceptual diagram of a process of sharpening an image over time.
FIGS. 19A and 19B are diagrams illustrating an example of setting the degree of image sharpening over time.
FIG. 20 is a diagram illustrating a flow of a main process from provision of the image data for distribution to printing.
FIG. 21 is a conceptual diagram of a process of changing the number of points required for downloading (printing) over time.
FIGS. 22A and 22B are diagrams illustrating an example of a method of expanding image data.

### DESCRIPTION OF THE PREFERRED EMBODIMENTS

Hereinafter, preferred embodiments of the present invention will be described in detail with reference to the accompanying drawings.

### [First Embodiment]

Here, as an example, a case where the present invention is provided to a system that provides the following services as an image distribution system will be described.

### [Overview of Service]

The present service is a service of distributing image data for printing. A user who desires to perform distribution downloads image data and prints the image data with a portable printer to acquire a photo as a printed matter.

The present service is used, for example, in a service of receiving provision of image data from a cast, an artist, an athlete, or the like in a field of entertainment, music, sports, and the like, and distributing the image data to fans as image data for printing.

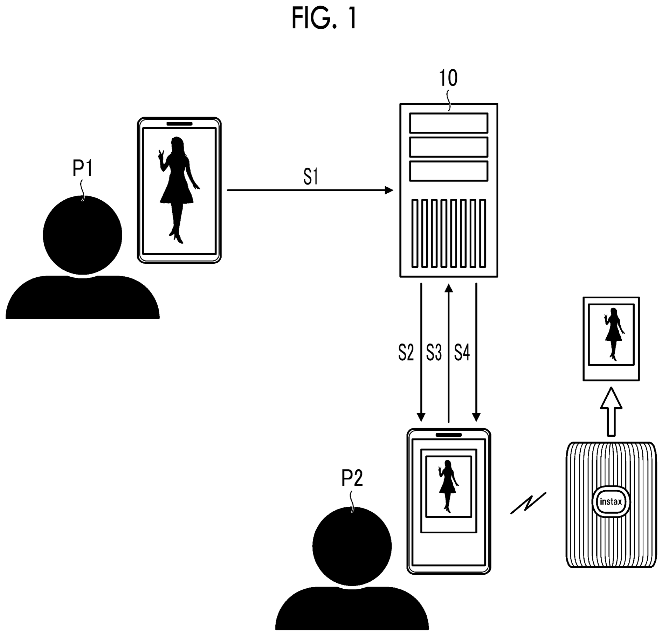

FIG. 1 is a conceptual diagram of the service. FIG. 1 illustrates an example of a case where provision of the image data is received from an artist P1 and is distributed to a fan P2.

S1: The artist P1 uploads image data of an image to be provided to the fan P2 to a distribution server 10 by using a terminal such as a smartphone.

S2: In a case where the image data is uploaded from the artist P1, a terminal of the fan P2 following the artist P1 is notified of information related to the distribution of the image data for printing.

S3: The fan P2 who desires to issue printing requests the distribution server 10 to distribute the image data for printing. The reception of the distribution request is limited to a certain period. Therefore, the fan P2 who desires to perform printing needs to issue the distribution request within a distribution period.

S4: The distribution server 10 transmits the image data for printing to the terminal of the fan P2 in response to the distribution request from the fan P2. The fan P2 receives (downloads) the image data transmitted from the distribution server 10, and prints the image data with a portable printer.

In this manner, the present service is characterized by the fact that the fan prints the image data provided by the artist or the like by using a handheld printer and the fact that a printable period of the image data is limited (distribution period).

### [Distribution System]

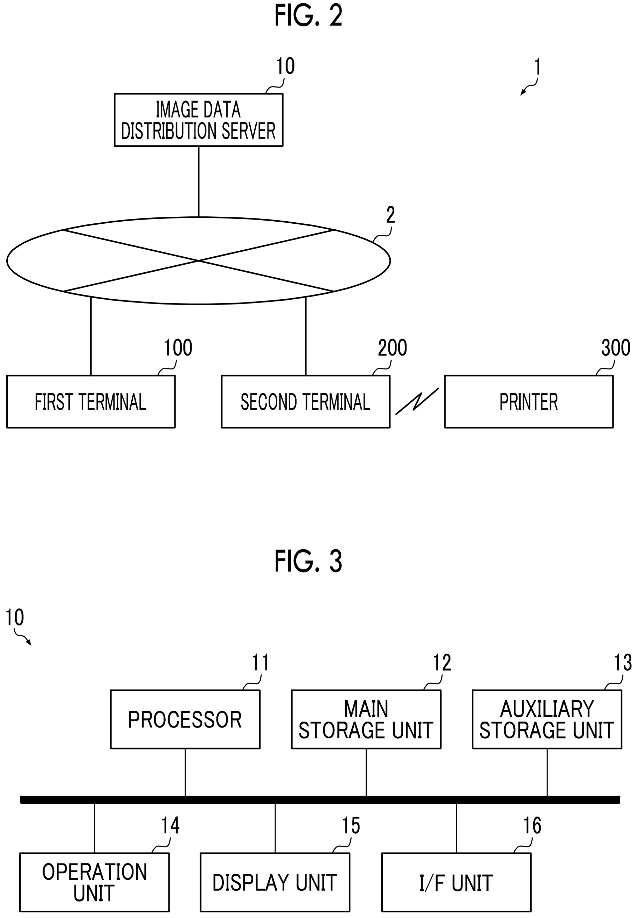

FIG. 2 is a schematic configuration diagram of the distribution system.

A distribution system 1 is mainly configured with the distribution server 10 that performs a distribution process of image data, a first terminal 100 that is owned by an artist and provides image data for distribution, a second terminal 200 that is owned by a fan and receives distribution of the image data, a printer 300 that is connected to the second terminal 200 and prints the image data, and the like.

The distribution server 10 and the first terminal 100 are connected to each other via a network 2 in a communicable manner. In the same manner, the distribution server 10 and the second terminal 200 are connected to each other via the network 2 in a communicable manner. The network 2 is constructed by, for example, a wireless communication network such as 4th Generation (4G), 5th Generation (5G), Worldwide Interoperability for Microwave Access (WiMAX), and Long Term Evolution (LTE), each base station, the Internet, and the like.

The second terminal 200 and the printer 300 are connected to each other via, for example, short range wireless communication such as Bluetooth (registered trademark) and wireless fidelity (WiFi) in a communicable manner.

### [Hardware Configuration of Distribution Server]

FIG. 3 is a block diagram illustrating an example of a hardware configuration of the distribution server.

The distribution server 10 has a configuration as a general server computer. That is, the distribution server 10 includes a processor 11, a main storage unit 12, an auxiliary storage unit 13, an operation unit 14, a display unit 15, an interface unit 16, and the like.

The processor 11 executes a program to function as various processing units. For example, in the present embodiment, the processor 11 is configured with a central processing unit (CPU). Various programs and various types of data executed by the processor 11 are stored in the main storage unit 12 and/or the auxiliary storage unit 13. The program is synonymous with software.

The main storage unit 12 includes a random access memory (RAM) and a read only memory (ROM). The RAM is used as a work area of the processor 11. The ROM stores a basic input and output program and the like.

The auxiliary storage unit 13 is configured with, for example, a hard disk drive (HDD), a solid state drive (SSD), and the like.

The operation unit 14 is configured with, for example, a keyboard, a mouse, and the like.

The display unit 15 is configured with, for example, a liquid crystal display (LCD), an organic electro luminescence (EL) diode display (OLED display), or the like.

The interface unit 16 includes a network interface for connecting the distribution server 10 to the network 2.

### [Hardware Configuration of First Terminal]

The first terminal 100 is configured with a computer that can communicate with the distribution server 10 via the network 2. Preferably, the first terminal 100 is configured with a mobile computer such as a smartphone or a tablet terminal. More preferably, the first terminal 100 is configured with a mobile computer having a camera function (imaging function). As an example, in the present embodiment, the first terminal 100 is configured with a smartphone including a camera function.

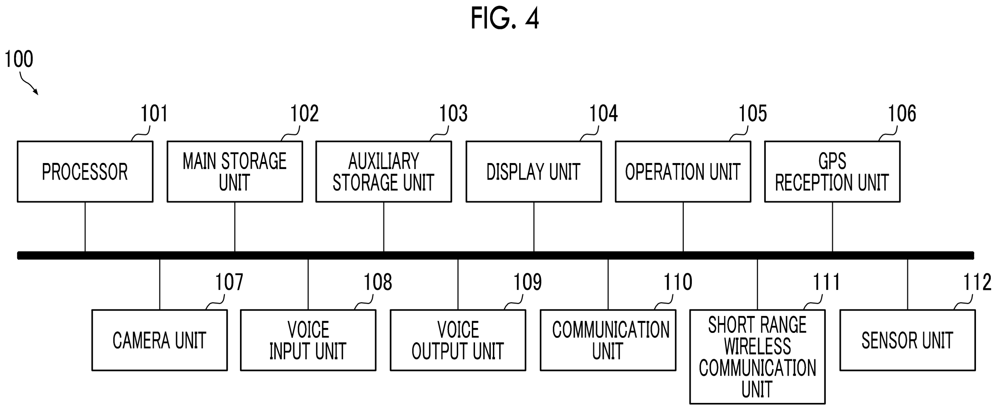

FIG. 4 is a block diagram illustrating an example of a hardware configuration of a first terminal. FIG. 4 illustrates an example of a case where the first terminal 100 is configured with a smartphone.

As illustrated in FIG. 4, the first terminal 100 comprises a processor 101, a main storage unit 102, an auxiliary storage unit 103, a display unit 104, an operation unit 105, a global positioning systems (GPS) reception unit 106, a camera unit 107, a voice input unit 108, a voice output unit 109, a communication unit 110, a short range wireless communication unit 111, a sensor unit 112, and the like.

The processor 101 executes a program to function as various processing units. As an example, in the present embodiment, the processor 101 is configured with a CPU. Various programs and various types of data executed by the processor 101 are stored in the main storage unit 102 and/or the auxiliary storage unit 103.

The main storage unit 102 includes a RAM and a ROM. The RAM is used as a work area of the processor 101. The ROM stores a basic input and output program and the like.

The auxiliary storage unit 103 is configured with, for example, a flash memory such as an electrically erasable and programmable ROM (EEPROM).

The display unit 104 is configured with, for example, a liquid crystal display, an organic EL display, or the like.

The operation unit 105 includes a touch panel and various operation buttons. The touch panel detects a touch operation on a screen of the display unit 104.

The GPS reception unit 106 receives a GPS signal including positional information on the first terminal 100.

The camera unit 107 includes an imaging lens and an image sensor, and electronically captures an image.

The voice input unit 108 includes a microphone, and inputs a voice.

The voice output unit 109 includes a speaker, and outputs the voice.

The communication unit 110 wirelessly communicates with a nearest base station or the like by using an antenna.

The short range wireless communication unit 111 performs short range wireless communication with an external apparatus by using the antenna.

The sensor unit 112 includes various sensors such as a geomagnetic sensor, a gyrocompass, and an acceleration sensor.

### [Hardware Configuration of Second Terminal]

The second terminal 200 is configured with a computer that can communicate with the distribution server 10 via the network 2 and can be connected to the printer 300. Preferably, the second terminal 200 is configured with a mobile computer such as a smartphone or a tablet terminal. As an example, in the present embodiment, the second terminal 200 is configured with a smartphone.

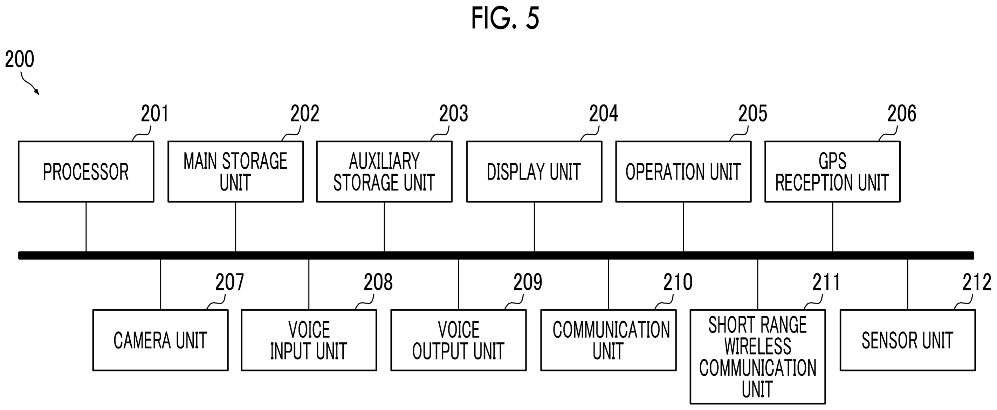

FIG. 5 is a block diagram illustrating an example of a hardware configuration of a second terminal. FIG. 5 illustrates an example of a case where the second terminal 200 is configured with a smartphone.

The second terminal 200 comprises a processor 201, a main storage unit 202, an auxiliary storage unit 203, a display unit 204, an operation unit 205, a GPS reception unit 206, a camera unit 207, a voice input unit 208, a voice output unit 209, a communication unit 210, a short range wireless communication unit 211, a sensor unit 212, and the like, in the same manner as the first terminal 100. Since the function of each unit is substantially the same as the function of the first terminal 100, the description of details thereof will be omitted.

In the present embodiment, the second terminal 200 is connected to the printer 300 via, for example, the short range wireless communication unit 211. The short range wireless communication unit 211 is connected to the printer 300 via, for example, Bluetooth (registered trademark) in a communicable manner.

### [Hardware Configuration of Printer]

The printer 300 receives a printing request from the second terminal 200 which is a connection destination, and prints an image on a recording medium. As an example, in the present embodiment, the image is printed on the recording medium using an instant film.

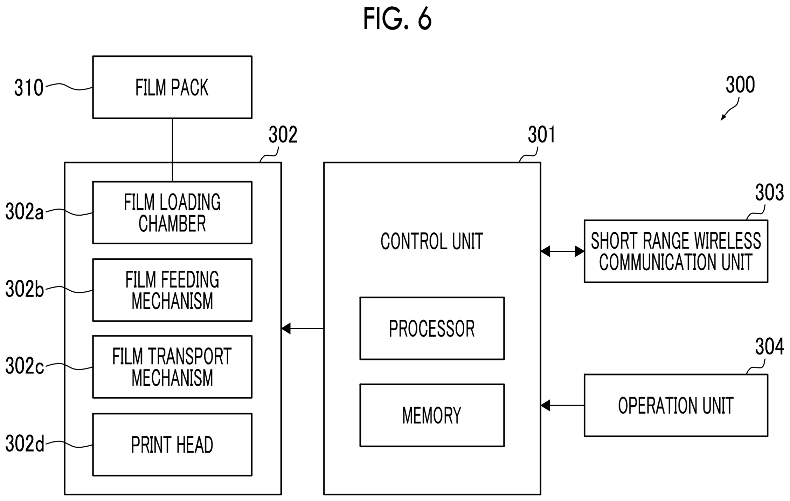

FIG. 6 is a block diagram illustrating an example of a hardware configuration of a printer.

As illustrated in FIG. 6, the printer 300 comprises a control unit 301, a printing unit 302, a short range wireless communication unit 303, an operation unit 304, and the like.

The control unit 301 integrally controls an operation of the printer 300. The control unit 301 is configured with, for example, a microcomputer including a processor and a memory. For example, the processor is configured with a CPU. The memory includes a RAM, a ROM, an EEPROM, and the like. The ROM and/or the EEPROM stores a program executed by the processor and various types of data necessary for control.

The printing unit 302 prints the image on the instant film under the control of the control unit 301. The printing unit 302 includes a film loading chamber 302a, a film feeding mechanism 302b, a film transport mechanism 302c, a print head 302d, and the like.

The film loading chamber 302a is a loading portion of the instant film. The instant film is loaded into the film loading chamber 302a in, for example, a form of a film pack 310. The film pack 310 is a film pack in which the instant film is accommodated in a predetermined cartridge. A plurality of instant films (for example, 10 sheets) are accommodated in the cartridge in a state of being laminated. For example, a mono-sheet type (sheet film type) instant film is used. A structure of this type of instant film and film pack 310 is known as an instant film and the film pack 310 used in, for example, an instant camera (Instax (registered trademark), product name "Cheki") manufactured by FUJIFILM Corporation.

The film feeding mechanism 302b feeds out the instant film one by one from the film pack 310 loaded in the film loading chamber 302a.

The film transport mechanism 302c transports the instant film fed from the film pack 310, by the film feeding mechanism 302b.

The print head 302d is configured with, for example, a line-shaped exposure head. The print head 302d irradiates an exposure surface of the instant film transported by the film transport mechanism 302c with print light by one line at a time to record an image.

The instant film on which the image is recorded is subjected to a development treatment in the transport process, and is discharged from a predetermined discharge port.

The short range wireless communication unit 303 performs short range wireless communication with an external apparatus (the second terminal 200 in the present embodiment) by using an antenna. In the present embodiment, the printer 300 and the second terminal 200 are connected via Bluetooth (registered trademark) in a communicable manner.

The operation unit 304 includes various operation buttons required for operating the printer 300, in addition to a power button.

### [Function of First Terminal]

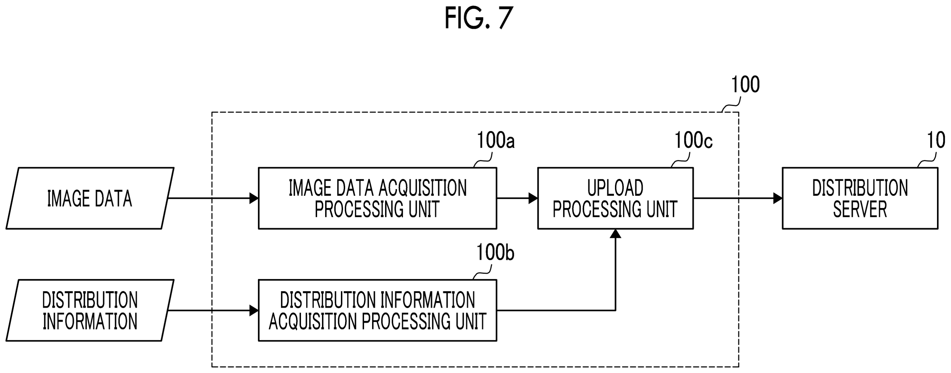

FIG. 7 is a block diagram of a main function of the first terminal.

As described above, the first terminal 100 provides image data for distribution. Regarding the provision of the image data for distribution, the first terminal 100 has functions of an image data acquisition processing unit 100a, a distribution information acquisition processing unit 100b, an upload processing unit 100c, and the like.

The image data acquisition processing unit 100a performs a process of acquiring image data for distribution. The image data for distribution is acquired, for example, by using the camera unit 107 provided in the first terminal 100. That is, the image data for distribution is acquired by imaging with the camera unit 107. In addition, the image data for distribution may be acquired in a form of being taken in from an external apparatus. Therefore, for example, image data captured by another imaging apparatus can also be used as the image data for distribution.

The distribution information acquisition processing unit 100b performs a process of receiving an input of predetermined information (distribution image information) for the image data for distribution to be provided. The distribution information includes, for example, a comment on the image data for distribution to be provided, information such as a distribution period (distribution date and time), and the like. The distribution information acquisition processing unit 100b displays a predetermined input screen on the display unit 104 to receive the input of the distribution information from a user.

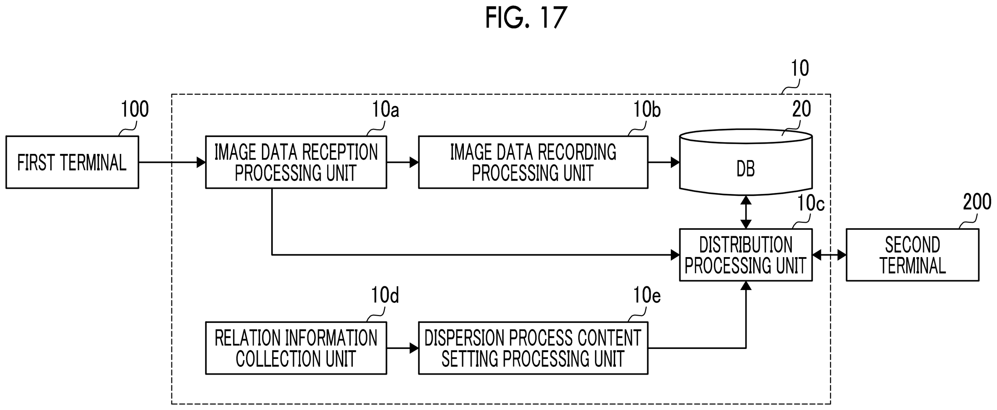

The upload processing unit 100c performs a process of uploading the image data for distribution and the distribution information to the distribution server 10. The upload processing unit 100c uploads the image data for distribution and the distribution information in association with identification information of the user. The identification information is configured with, for example, a user account. The user account is set, for example, in a case where the user applies to use the service. In a case of setting the user account, various types of information are required to be input for the user, and the input information is recorded in a database 20 (see FIG. 17) of the distribution server 10 in association with the user account. The user is required to input, for example, information such as an identification (ID), a password, an account name (name, romaji notation, katakana), a self-introduction, a profile image, a birthday, a birthplace, a group name, a charge color, a debut date, a uniform resource locator (URL) of a website, and a URL of a social networking service (SNS). The uploading is performed in response to an execution instruction from the user (artist). The upload processing unit 100c displays a predetermined operation screen on the display unit 104 to receive an execution instruction of the uploading from the user.

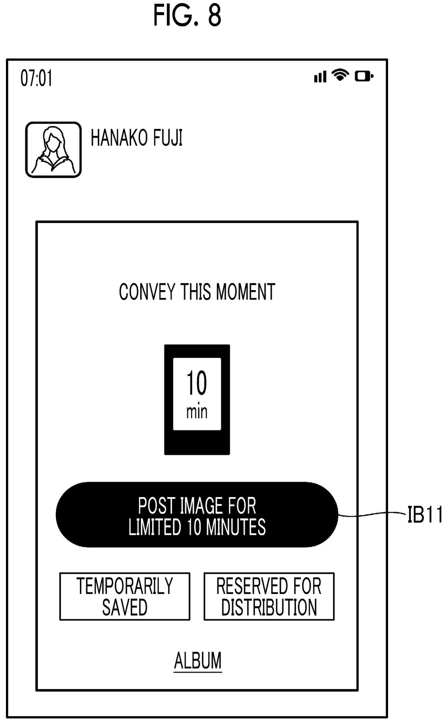

FIGS. 8 to 11 are diagrams illustrating an example of an operation screen in a case where image data for distribution is uploaded (posted).

FIG. 8 illustrates an example of an initial screen.

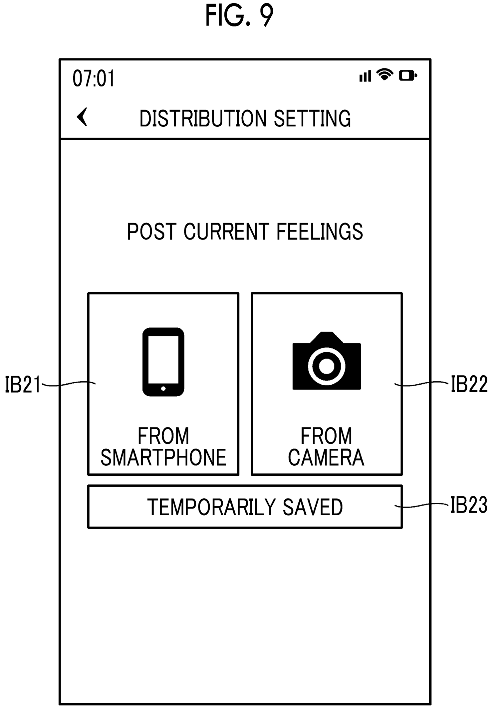

A user (artist) taps a button IB11 displayed on the screen to start a process for uploading (posting). In a case where the button IB11 is tapped, a transition is made to a screen in FIG. 9.

FIG. 9 illustrates an example of a selection screen for a method of acquiring image data.

FIG. 9 illustrates an example of a case where three methods are prepared as the method of acquiring the image data. A first method is a method of capturing with the first terminal 100 (smartphone) and acquiring the image data. A second method is a method of acquiring the image data from an external camera (including a camera with a printer and the like). A third method is a method of acquiring the image data from captured image data (image data saved in the first terminal 100). In a case of acquiring the image data by the first method, a button IB21 is tapped. In a case of acquiring the image data by the second method, a button IB22 is tapped. In a case of acquiring the image data by the third method, a button IB23 is tapped.

In a case where the first method is selected, the camera unit 107 of the first terminal 100 is activated, and an image can be captured.

In a case where the second method is selected, a connection setting with the external camera is performed, and the image data is fetched from the connected camera.

In a case where the third method is selected, the captured image data (image data saved in the first terminal 100) is displayed in a list, and the image data can be selected.

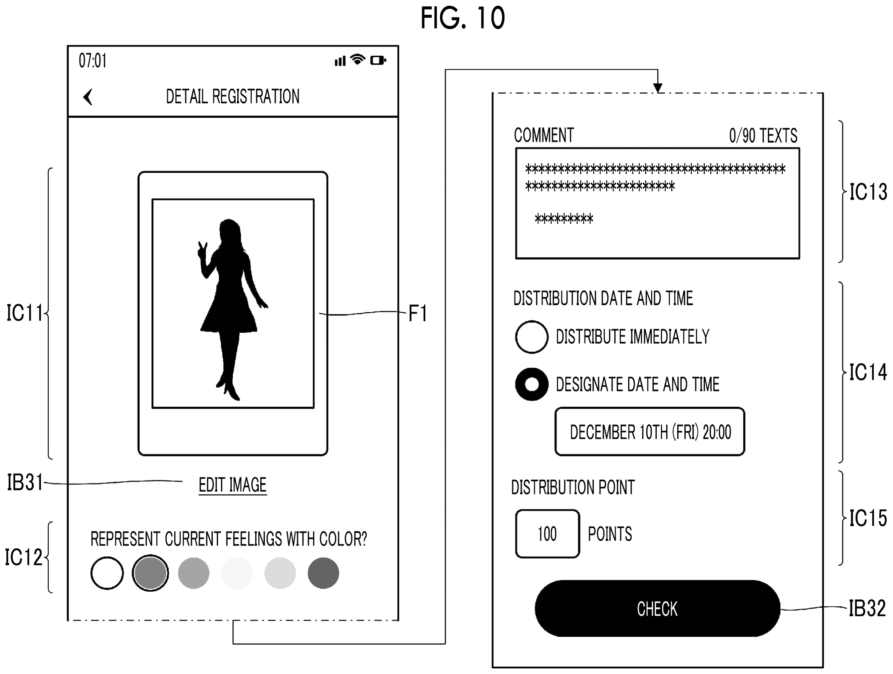

In a case where the image data for distribution is acquired, a transition is made to a screen in FIG. 10.

FIG. 10 illustrates an example of an input screen for distribution information.

FIG. 10 illustrates an example of a case where color information, a comment, a distribution date and time, and information on a distribution point are input as distribution information.

Here, the "color information" is information in which feelings of a user in posting (uploading) are expressed in color. In the example illustrated in FIG. 10, the color is selected from six colors (white, red, orange, yellow, blue green, and purple) determined in advance. A default color is white. Therefore, in a case where the color is not selected, the color information is automatically selected as white.

The "comment" is a comment of the user on an image to be distributed.

The "distribution date and time" is information on a date and time at which the distribution is started. The example illustrated in FIG. 10 illustrates an example in which the user can select a case where the distribution is immediately performed after the upload and a case where the distribution is performed by designating the date and time.

The "distribution point" is a point necessary for printing (downloading). In the present embodiment, payment for the printing (downloading) is performed with the point. Therefore, the point is substantially synonymous with a currency in the present system. In addition, the number of points is substantially synonymous with a price. That is, in the present system, the right of printing is bought and sold by the point.

As illustrated in FIG. 10, the screen is provided with a display field IC11 for the image to be distributed, an input field IC12 for the color information, an input field IC13 for the comment, an input field IC14 for the distribution date and time, and an input field IC15 for the distribution point.

A predetermined frame F1 is displayed in the display field IC11 for the image, and the image (image represented by image data for distribution) to be distributed is displayed in the frame F1. The frame F1 is configured with an image imitating a frame of an instant film. Therefore, the image is displayed in the display field IC11 in a form imitating a print result.

In the present example, the image can also be edited. In a case where a button 31 of "edit image" displayed on the screen is tapped, a transition is made to an image editing screen, and the image can be edited (processed). Details of the image editing will not be described, but the image editing function has a drawing function in addition to a general retouching function (brightness adjustment, chroma saturation adjustment, sharpness adjustment, trimming, and the like). Therefore, by performing the image editing, a handwritten text such as a signature and a message can be added to the image.

In the input field IC12 for color information, selectable colors are in a display list of pictures. FIG. 10 illustrates an example of a case where circles filled with selectable colors are displayed in a horizontal line. The user taps a circle of a desired color to select the color.

A predetermined frame is displayed in the comment input field IC13. The user inputs a comment in the frame by using a text input function provided in the first terminal 100.

In the input field IC14 for the distribution date and time, two selection items of a case of immediately distributing ("immediately distribute") and a case of designating a date and time and distributing ("designate date and time") are displayed. The user taps any selection item to set a date and time for distribution. In a case where designating the date and time is selected, the user inputs (designates) a date and time at which the distribution is to be started. The user inputs the distribution date and time by using the text input function provided in the first terminal 100. In addition, a calendar and a clock may be displayed to select the date and time.

As described above, the distribution system 1 of the present embodiment is characterized in that printing of the image data is available for a certain time (distribution period). The distribution period is, for example, 10 minutes from the start of the distribution. In a case where a date and time is designated, 10 minutes from the designated date and time is the distribution period (printing-available period). In a case of immediately distributing, the distribution process is performed immediately after the image data for distribution is posted. In this case, 10 minutes after the start of the distribution is the distribution period.

In the input field IC15 for the distribution point, a frame for inputting the distribution point is displayed. The user inputs a point necessary for downloading (printing) in the frame. The user inputs a numerical value of the point in the frame by using the text input function provided in the first terminal 100. In addition, a selectable numerical value may be displayed in a pull-down manner to be selectable.

A button IB32 for checking the input content is also displayed on the input screen for the distribution information. The button IB32 for checking is displayed, for example, at a position of an end of the screen (final position in a case of scrolling). The button IB32 for checking is activated in a case where the inputs to all the input fields are completed. Therefore, in a case where there is an input field to which nothing is input, the tapping is not responded to. In addition, a color of the button IB32 for checking is changed in a case where the inputs to all the input fields are completed. For example, gray is replaced with black. Therefore, it is possible to visually check that the inputs to all the input fields are completed.

In a case where the inputs to all the input fields are completed and the button IB32 for checking is tapped, a transition is made to a check screen of a distribution content (post content).

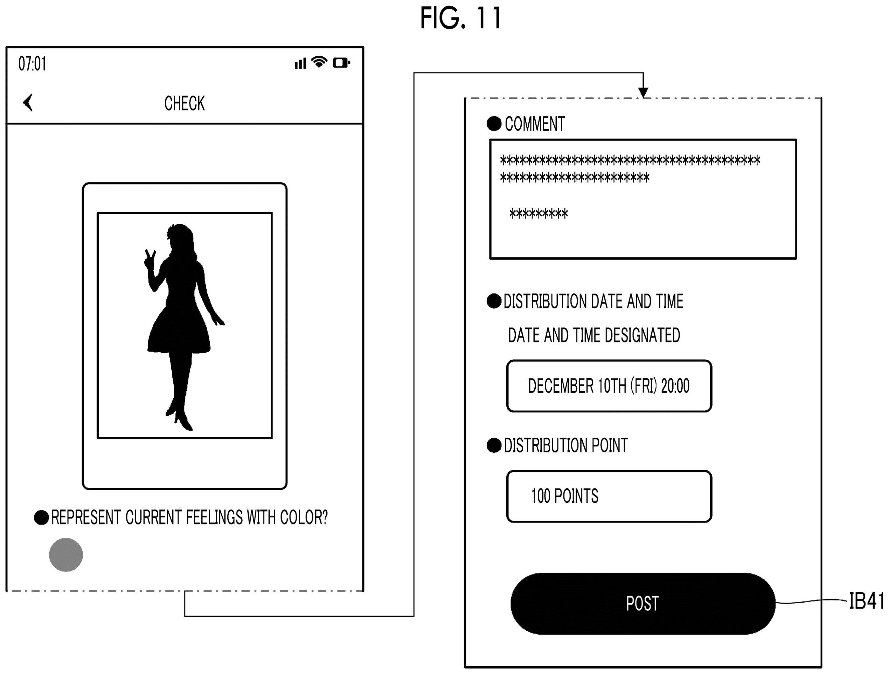

FIG. 11 illustrates an example of the check screen for the distribution content.

As illustrated in FIG. 11, an image to be distributed (image to be posted) and information (color information, comment, distribution date and time, and information on a distribution point) input as distribution information are displayed on the check screen for the distribution content.

In addition, as illustrated in FIG. 11, a button IB41 for posting (uploading) is also displayed on the check screen for the distribution content. The button IB41 for posting is displayed at an end of the screen, for example.

In a case where there is no error in the image to be distributed and the input distribution information, a user taps the button IB41 for posting. In a case where the button IB41 for posting is tapped, an instruction to execute uploading is provided. Therefore, the image data for distribution and the distribution information are uploaded to the distribution server 10.

In a case where there is an error in the input distribution information, the user returns to the input screen of the distribution information, and corrects the input information of the corresponding portion.

### [Function of Second Terminal]

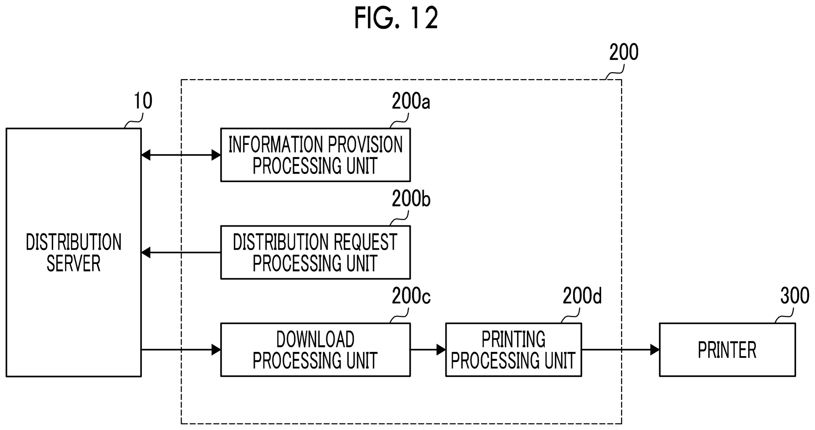

FIG. 12 is a block diagram of a main function of the second terminal.

The second terminal 200 performs a process of providing information on image data for printing that can be distributed to a user (fan), a process of requesting the distribution server 10 to distribute the image data for printing, a process of printing the image data distributed by the printer 300, and the like. Regarding these processes, the second terminal 200 has functions of an information provision processing unit 200a, a distribution request processing unit 200b, a download processing unit 200c, a printing processing unit 200d, and the like. In the present embodiment, the second terminal 200 is an example of a terminal that issues a distribution request.

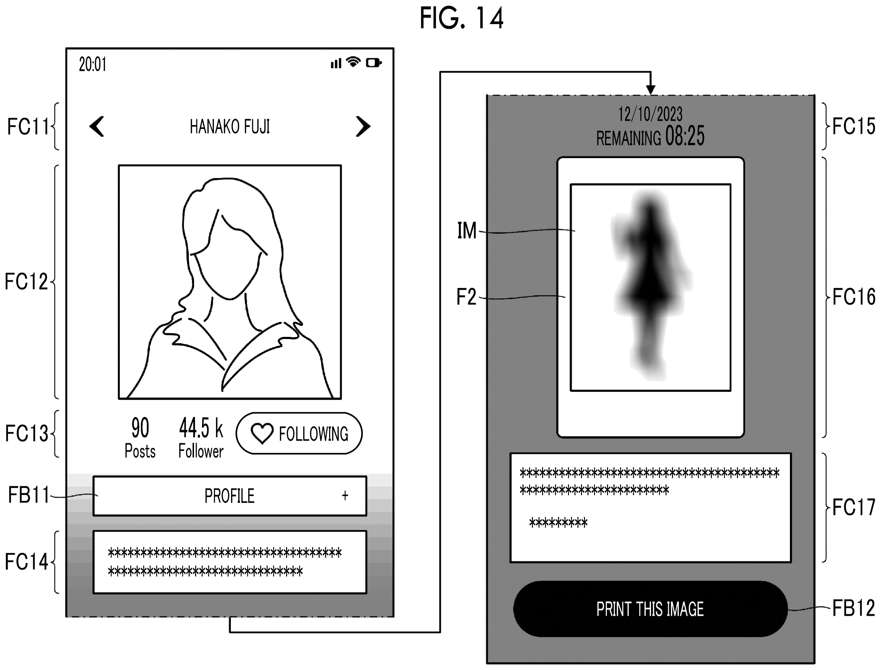

The information provision processing unit 200a performs a process of providing the information on the image data for printing that can be distributed to the user (fan). The information provision processing unit 200a acquires information related to the image data for printing that can be distributed from the distribution server 10, displays the acquired information on the display unit 204 in a predetermined format, and provides the information to the user (see FIG. 14).

In addition, the information provision processing unit 200a receives a notification of the information on the distribution from the distribution server 10, and performs a process of notifying the user (so-called push notification). The notification is performed, for example, in a case where a followed user (artist) uploads image data for distribution. The term "follow" means to register the user (artist) to receive provision of predetermined information (including a notification of information related to distribution). Therefore, an artist that the user supports, an artist that the user is interested in, or the like is a target of the following. The following application is performed, for example, by displaying a predetermined operation screen on the second terminal 200. The user (fan) follows a specific user (artist), and thus a user account of the user followed is registered in association with a user account of the user. The user account (identification information) of the user who is a fan is set, for example, in a case where the user applies for the use of the service. Information on the user account of the set user (fan) is recorded in the database 20 (see FIG. 17). In addition, information on the user account of the user (artist) followed by each user (fan) is also recorded in the database 20 for each user.

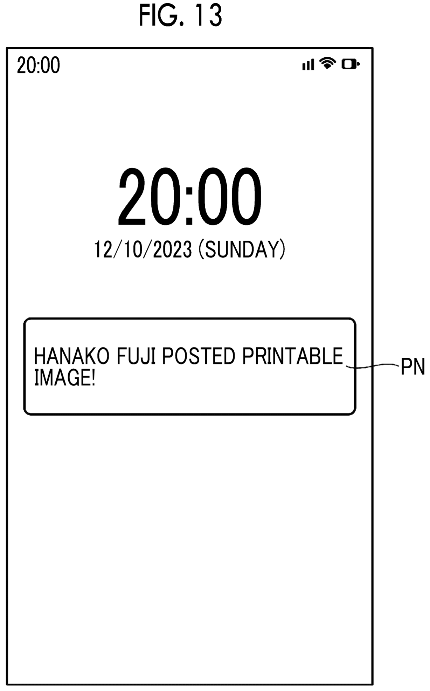

FIG. 13 is a diagram illustrating an example of a screen display of the second terminal in a case where a notification is received.

As illustrated in FIG. 13, in a case where the notification is received, a message PN is displayed on the screen. For example, the pop-up display is performed. The message PN includes information on a user who posts (artist) and information on the posting of an image by the user.

The distribution request processing unit 200b performs a process of requesting the distribution server 10 to distribute the image data for printing in response to an instruction of the distribution request from a user (fan). The distribution request processing unit 200b displays a predetermined operation screen on the display unit 204 to receive the instruction of the distribution request from the user.

As will be described later, the image data for printing requested to be distributed is downloaded to the second terminal 200 and is printed by the printer 300. Therefore, the distribution request is substantially synonymous with the printing request.

The download processing unit 200c performs a process of downloading the image data for which the distribution request is made from the distribution server 10.

The printing processing unit 200d performs a process of printing the downloaded image data for printing on the printer 300.

FIG. 14 is a diagram illustrating an example of a display screen in a case where information on image data for printing that can be distributed is provided to a user. FIG. 14 also serves as an operation screen for a distribution request. By receiving the notification and tapping the message PN (see FIG. 13) displayed on the screen, a transition is made to the screen (distribution request reception screen) illustrated in FIG. 14.

As illustrated in FIG. 14, in the distribution request reception screen, a display field FC11 for information on a user who distributes (artist), a display field FC12 for a profile image of the user who distributes, a display field FC13 for information on the number of distributions and the number of followers of the user who distributes, a profile button FB11, a display field FC14 for a message posted by the user who distributes, a display field FC15 for a distribution period, a display field FC16 for an image during distribution (image represented by image data for printing that can be distributed), a display field FC17 for a comment, a print button FB12, and the like are displayed.

In the display field FC11 for the information on the user who distributes, a name of the user who distributes (artist) is displayed.

In the display field FC12 for the profile image of the user who distributes, a profile image of the user who distributes (artist) is displayed.

In the display field FC13 for the information on the number of distributions and the number of followers of the user who distributes, the number of distributions and the number of followers of the user who distributes (artist) are displayed. The number of distributions is the total number of images distributed (posted) by the user so far. The number of followers is the total number of users (fans) who follow the user (artist).

The profile button FB11 is a button for instructing a display of a profile of the user who distributes. In a case where the profile button FB11 is tapped, the profile of the user who distributes is displayed. The profile is displayed, for example, by a pull-down or a pop-up.

In the display field FC15 for the distribution period, a remaining time (a remaining time in which an application for printing is available) in which the distribution request can be made is displayed. That is, a time until an end of the distribution is counted down and displayed. FIG. 14 illustrates an example in a case where the remaining time is 8 minutes and 25 seconds.

A predetermined frame F2 is displayed in the display field FC16 for the image during distribution, and an image IM represented by the image data for printing is displayed in the frame F2. The frame F2 is configured with an image imitating a frame of the instant film. In addition, the image IM is displayed with an adjusted clearness. This point will be described in detail later.

In the distribution request reception screen, at least a part of a background is displayed in a predetermined color (background color). FIG. 14 is an example of a case where a background of a region below the profile button FB11 is displayed in the predetermined color. A color to be displayed is a color selected by the user (artist) who posts the image during distribution in a case where the image is posted. For example, in a case where the user (artist) selects "red" as color information at the time of posting, the background color is set to red.

In the display field FC17 for the comment, a comment (a comment input by the user who distributes at the time of posting) attached to the image during distribution is displayed.

The print button FB12 is a button for performing an application for printing for the image displayed in the display field FC16 for the image during distribution. In the present embodiment, the application for printing is synonymous with the distribution request. That is, by tapping the print button FB12, a distribution request for image data for printing is instructed for the image displayed in the display field FC16.

As described above, by issuing the distribution request, the image data for printing is downloaded from the distribution server 10 and is printed by the printer 300. It is assumed that the printer 300 is connected to the second terminal 200 in advance.

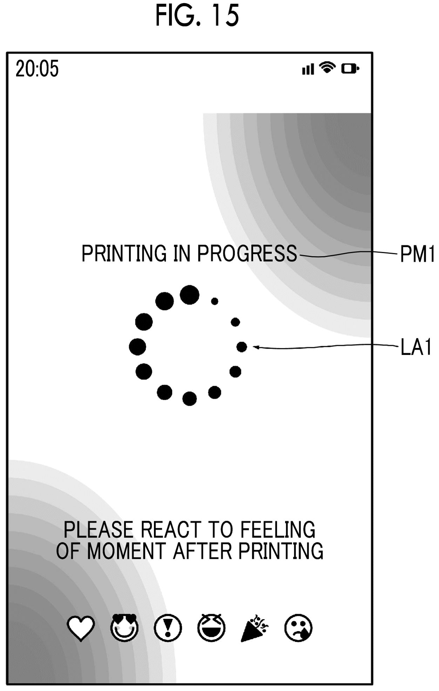

FIG. 15 is a diagram illustrating an example of a display screen during printing.

In a case where the distribution request is approved, the image data for printing is downloaded from the distribution server 10, and printing is started by the printer 300, a screen (screen during printing) illustrated in FIG. 15 is displayed on the display unit 204. More specifically, in a case where a signal indicating execution (start) of the printing is received from the printer 300, a screen during printing is displayed on the display unit 204.

A message PM1 indicating that printing is in progress is displayed on the middle screen during printing. In addition, an animation LA1 (so-called loading animation) indicating that printing is in progress is displayed. In the example illustrated in FIG. 15, an animation in which circles (dots) arranged on the same circumference at regular intervals rotate along the circumference is displayed.

In addition, in the screen during printing, at least a part of a background is displayed in a predetermined color. FIG. 15 is an example of a case where regions of an upper right corner and a lower left corner of the screen are displayed in the predetermined color (background color). A color to be displayed is a color selected by the user (artist) who posts the image during distribution in a case where the image is posted.

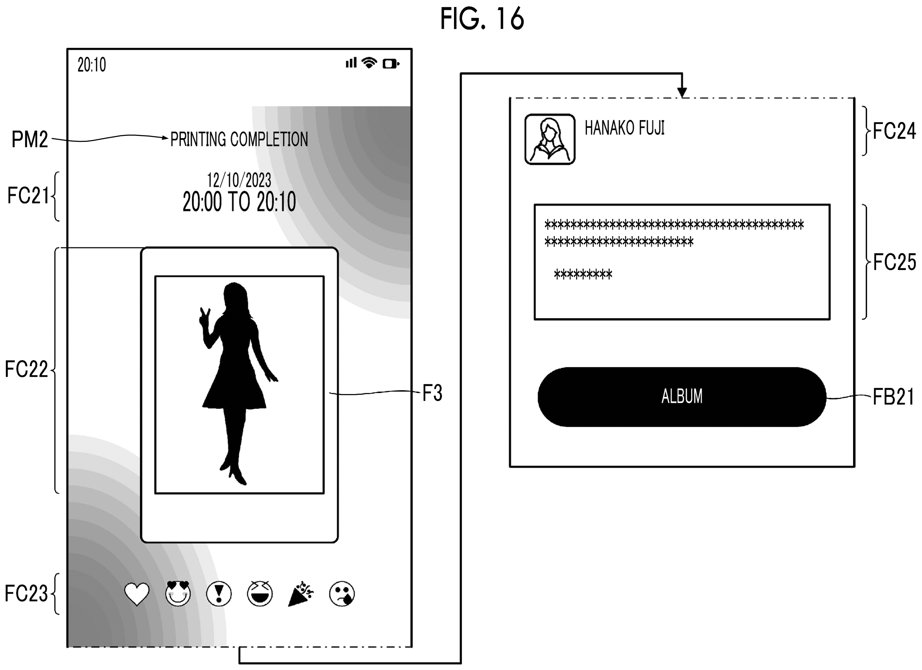

FIG. 16 is a diagram illustrating an example of a display screen after printing completion.

In a case where the printing by the printer 300 is completed, a screen (printing completion screen) illustrated in FIG. 16 is displayed. In a case where the printing is completed, the printer 300 outputs information (printing completion notification) to the second terminal 200. In a case where the printing completion notification is received from the printer 300, the second terminal 200 displays the printing completion screen on the display unit 204.

As illustrated in FIG. 16, on the printing completion screen, a message PM2 indicating completion of printing, a display field FC21 for information on a distribution period (distribution date and time), a display field FC22 for a printed image, a display field FC23 for a reaction button, a display field FC24 for information on a user who distributes (artist), a display field FC25 for a comment, an album button FB21, and the like are displayed.

In the display field FC21 for the information on the distribution period, the information on the distribution period (distribution date and time) of the printed image is displayed.

A predetermined frame F3 is displayed in the display field FC22 for the printed image, and the printed image is displayed in the frame F3. The frame F3 is configured with an image imitating a frame of an instant film.

The selectable reaction button is displayed in the display field FC23 for the reaction button. The reaction button is a button that allows a user (fan) to express feelings as a reaction to the printed image.

In the display field FC24 for the information on the user who distributes, an icon in which a profile image of the user who distributes is displayed and a name of the user who distributes are displayed.

In the display field FC25 for the comment, a comment (a comment input by the user who distributed at the time of posting) attached to the printed image is displayed.

The album button FB21 is a button for providing an instruction to activate the album. In the album, an image printed in the past by the user (fan) is stored. The user (fan) can view the image printed in the past in the album.

In the printing completion screen, at least a part of a background is displayed in a predetermined color (background color). FIG. 15 is an example of a case where regions of an upper right corner and a lower left corner of the display field FC22 for the printed image are displayed in the predetermined color (background color). A color to be displayed is a color selected by the user (artist) who posts the printed image at the time of posting the image.

### [Function of Distribution Server]

FIG. 17 is a block diagram of a main function of the distribution server.

The distribution server 10 receives provision of image data for distribution from the first terminal 100, and distributes image data for printing to the second terminal 200. In the present embodiment, the distribution server 10 is an example of an image data distribution apparatus.

As illustrated in FIG. 17, the distribution server 10 has functions of an image data reception processing unit 10a, an image data recording processing unit 10b, a distribution processing unit 10c, a relation information collection unit 10d, a dispersion process content setting unit 10e, and the like.

The image data reception processing unit 10a performs a process of receiving provision of the image data for distribution from the first terminal 100. Specifically, the image data reception processing unit 10a performs a process of receiving the image data for distribution uploaded from the first terminal 100 and distribution information thereof are received.

The image data recording processing unit 10b performs a process of recording the image data for distribution uploaded from the first terminal 100 and the distribution information in a database (DB) 11. The uploaded image data for distribution and the distribution information are recorded in the database 20 in association with identification information (user account) of a user who uploads.

The distribution processing unit 10c performs a process of distributing the image data for printing to the second terminal 200. The process performed by the distribution processing unit 10c includes a notification process, an information provision process, a reception process of a distribution request, a transmission process of image data for printing, and the like.

The notification process is a process of notifying the second terminal 200 of a specific user (fan) of information related to the distribution in a case where the image data for distribution is uploaded. The user (fan) who receives the notification is a user who follows the user (artist) who uploads the image data for distribution. The distribution processing unit 10c performs a process of notifying the information related to the distribution based on information recorded in the database 20.

The information provision process is a process of providing information on the image data for printing that can be distributed. The distribution processing unit 10c provides (transmits) information necessary for displaying the distribution request reception screen illustrated in FIG. 14 to the second terminal 200.

The reception process of the distribution request is a process of receiving the distribution request (printing request) from the second terminal 200. In response to the distribution request from the user (fan) via the second terminal 200, a distribution period, the number of points owned, and the like are checked, and in a case where the conditions are satisfied, the request is approved. That is, downloading is permitted.

The transmission process of the image data for printing is a process of transmitting the image data for printing to the second terminal 200 to which the distribution request is approved.

The image data for printing does not necessarily have to be the image data for distribution uploaded by the user (artist). For example, image data for distribution obtained by resizing or the like (changing resolution and/or size) of the image data for distribution uploaded by the user (artist) may be distributed as the image data for printing. In addition, an image converted into an image format that can be printed by the printer 300 may be distributed as the image data for printing.

The relation information collection unit 10d collects various types of information on the Internet related to the image data for printing to be distributed. In particular, statistical information on the information on the Internet related to the image data for printing to be distributed is collected. The statistical information is information obtained by a statistical method.

As an example, in the present embodiment, the statistical information on information on the Internet related to the image data for printing to be distributed is collected by using a hashtag in SNS or the like. The hashtag is a label (tag) given to a post to SNS or the like, and is for making it easy to search from other users by specifying a classification, a target, a topic, and the like. In general, a word or a phrase is described after the symbol "#". The relation information collection unit 10d collects information on the number of posts (posting count) in which a hashtag related to the image data for printing to be distributed is attached. The information on the posting count is an example of the statistical information on the information on the image data for printing to be distributed on the SNS.

In general, a wording of the hashtag can be optionally determined by the user. The relation information collection unit 10d collects the information on the number of posts with the hashtag of the wording related to the image data for printing to be distributed, and acquires information (statistical information) on the total number of posts.

In some cases, the user (artist) who distributes or a person related to the user announces an official hashtag (a hashtag officially recommended to be used in a case of being mentioned on SNS or the like) for the hashtag. In this case, a configuration can be adopted in which the information (statistical information) on the total number of posts with the official hashtag is acquired.

The posting count may be the number of posts on a specific SNS or may be a value obtained by summing up the number of posts on a plurality of SNSs.

In addition, the number of posts describing the image data for printing to be distributed may be counted and acquired as the statistical information.

Further, in a case where a Web page that announces, promotes, or the like the image data for printing to be distributed is present, the number of accesses to the Web page may be counted and acquired as the statistical information. The information on the number of accesses is another example of the statistical information on the information on the Internet related to the image data. In addition, the Web page that announces, promotes, or the like the image data for printing to be distributed is an example of the Web page on which information related to the image data is posted.

In this manner, the relation information collection unit 10d collects various types of information on the Internet related to the image data for printing to be distributed, particularly, the statistical information. The obtained information is used for demand forecasting. That is, the image data is used to predict how much the distribution request (order for printing) is estimated for the image data for printing to be distributed. In general, it is presumed that the more information is present on the Internet, the more the information has a topic and the more the information is in demand. That is, it is estimated that the larger the number of pieces of information obtained as the statistical information, the larger the number of distribution requests (for example, it is estimated that the larger the posting count, the larger the number of distribution requests). The information collected by the relation information collection unit 10d is an example of first information.

The dispersion process content setting unit 10e sets a content of a dispersion process, based on the information collected by the relation information collection unit 10d. The dispersion process is a process of dispersing distribution requests and/or a process of distributing a process of receiving the distribution requests. In the present embodiment, as the dispersion process, the content of the process of dispersing the distribution requests is set. Then, as the process of dispersing the distribution requests, a process of sharpening the image IM over time (image represented by the image data for printing) which is displayed in the display field FC16 for the image during distribution is performed on the distribution request reception screen.

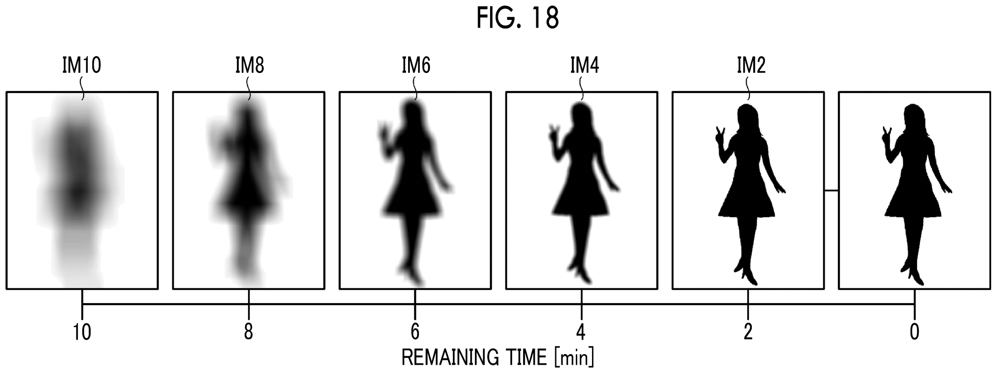

FIG. 18 is a conceptual diagram of a process of sharpening an image over time.

FIG. 18 illustrates an example of a case where a clearness of the image is changed by so-called blurring processing. In FIG. 18, a lateral axis is a remaining time in which distribution is available. FIG. 18 illustrates an example in a case where a distribution period is 10 minutes.

Since the blurring processing itself is known image processing, the description of the details thereof will be omitted. In general, a process of blurring each point in the image is performed. In order to blur a color of the point, the color of the point is averaged by the color around the point. The stronger the blurring is, as the number of surrounding points used in the averaging is increased.

An image IM10 is an image at a start of the distribution (image at the remaining time of 10 minutes) and is the most unclear image. An image IM8 is an image after 2 minutes from the start of the distribution (image at the remaining time of 8 minutes). An image IM6 is an image after 4 minutes from the start of the distribution (image at the remaining time of 6 minutes). An image IM4 is an image after 6 minutes from the start of the distribution (image at the remaining time of 4 minutes). An image IM2 is an image after 8 minutes from the start of the distribution (image at the remaining time of 2 minutes), and is the clearest image (image on which the blurring processing is not executed). Thereafter, the same image (image on which the blurring processing is not executed) is displayed until the distribution ends.

As illustrated in FIG. 18, the images IM10 to IM2 are sharpened as the time elapses. Therefore, the image is clearer as the remaining time is shorter.

There are fans who want to print any image as long as the image is an image of an artist and the like that the fan supports. On the other hand, there are also fans who determine to print after carefully checking the image. It is assumed that the former makes a distribution request (order for printing) at a relatively early stage. On the other hand, it is assumed that the latter makes a distribution request at a relatively late stage since it is necessary to check the image well. Therefore, as in the present example, by sharpening the image IM displayed on the distribution request reception screen over time, it is possible to disperse the distribution requests (printing orders) from the user (fan). Therefore, it is possible to suppress the concentration of the distribution request from the user (fan) in a specific period such as immediately after the start of the distribution.

The dispersion process content setting unit 10e sets the degree of image sharpening over time, based on the information collected by the relation information collection unit 10d. In the present embodiment, in a case where the clearness of the image is changed by so-called blurring processing, a speed of sharpening the image is changed based on the information collected by the relation information collection unit 10d. Specifically, as the number of pieces of information obtained as the statistical information is larger, the speed of sharpening the image is slower (as the number of pieces of information obtained as statistical information is smaller, the speed of sharpening the image is faster). Therefore, as the number of pieces of information obtained as the statistical information is larger, the image is more slowly sharpened. That is, the image is not sharpened until immediately before the end of the distribution. On the other hand, the image is sharpened at a relatively early stage as the number of pieces of information obtained as the statistical information is smaller.

The speed of the image sharpening is set, for example, based on the information collected by the relation information collection unit 10d, a time point at which the image is completely sharpened is set, and the speed of the sharpening is set such that blurring of the image is completely removed at the set time point. For example, in a case where the image is completely sharpened at a stage of the remaining time of 2 minutes, the speed of the sharpening is set such that the blurring is completely removed until the remaining time of 2 minutes.

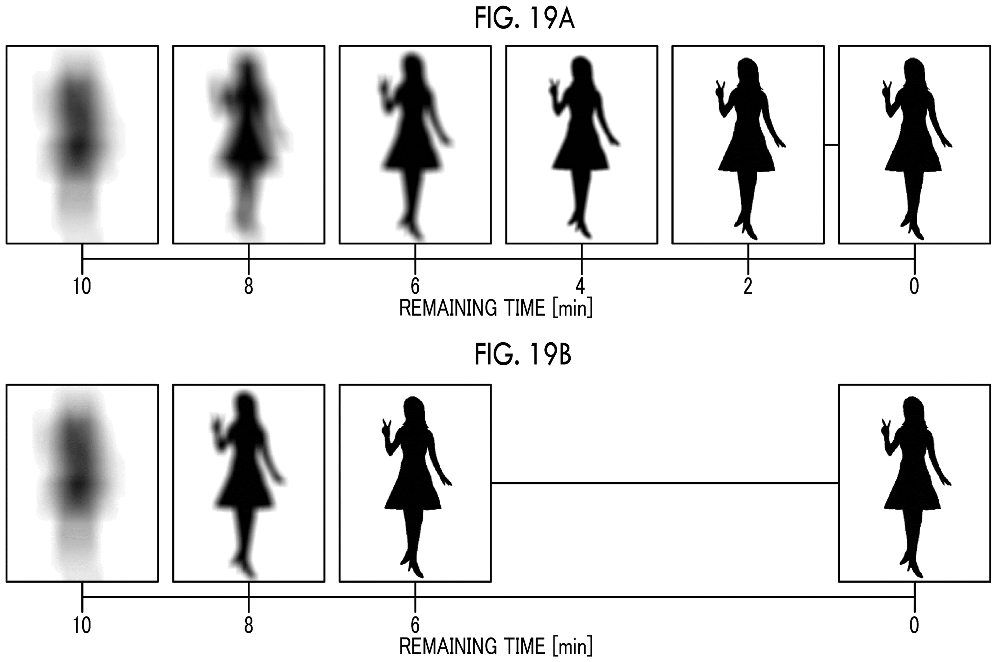

FIGS. 19A and 19B are diagrams illustrating an example of setting the degree of image sharpening over time.

FIGS. 19A and 19B illustrate an example of a case where a speed of sharpening the image is changed based on information on a posting count in a case where a clearness of the image is changed by so-called blurring processing. In FIGS. 19A and 19B, a lateral axis is a remaining time for distribution, and is an example in a case where a distribution period is 10 minutes.

In FIGS. 19A and 19B, FIG. 19A in an upper part illustrates an example of a setting in a case where the posting count is large, and FIG. 19B in a lower part illustrates an example of a setting in a case where the posting count is small.

As illustrated in FIG. 19A, the larger the posting count, the slower the speed of image sharpening is set, and the image is slowly sharpened. FIG. 19A is an example of a setting in which the image is most clear (no blurring) at a stage of the remaining 2 minutes.

On the other hand, as illustrated in FIG. 19B, the smaller the posting count, the faster the speed of image sharpening is set, and the image is sharpened at an early stage from the start of distribution. FIG. 19B is an example of a setting in which the image is most clear (not blurred) at a stage of the remaining 6 minutes.

In the present example, a table in which a relationship between the posting count and the time point (remaining time) at which the image is completely sharpened is predetermined is prepared, and the dispersion process content setting unit 10e sets a time point at which the image is completely sharpened from a posting count with reference to the table. Then, a speed required to completely sharpen the image up to the set time point is calculated.

In this manner, the dispersion process content setting unit 10e sets the degree of image sharpening over time based on the information collected by the relation information collection unit 10d. In particular, in the present embodiment, the speed of the image sharpening is set.

### [Action of Distribution System]

Here, a flow of a process until a user (fan) prints an image will be described by using the distribution system 1 of the present embodiment.

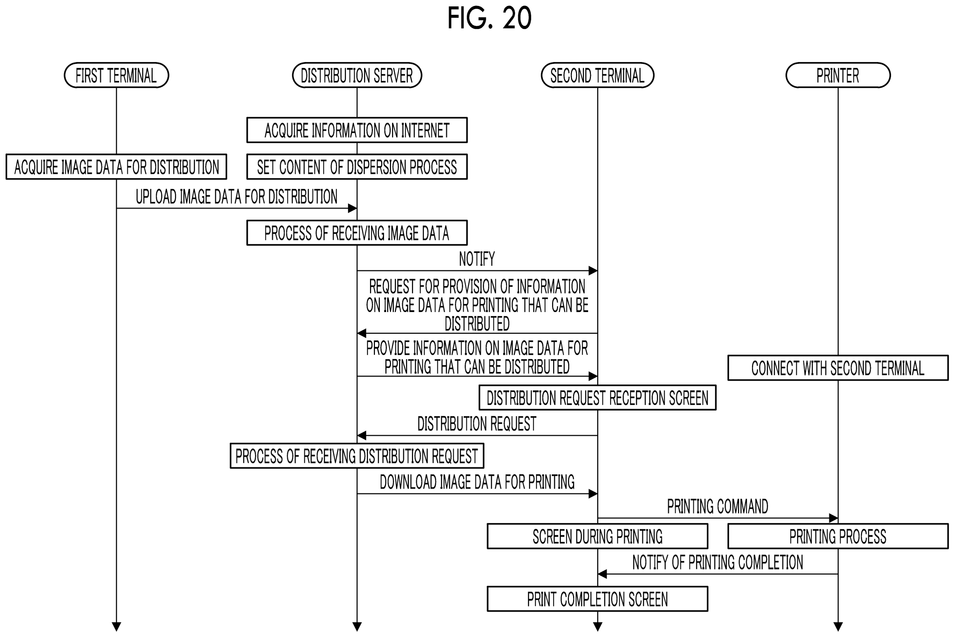

FIG. 20 is a diagram illustrating a flow of a main process from provision of image data for distribution to printing.

Here, a case where a user (artist) who provides (posts) the image data notifies the provision (posting) of the image data before a start of the distribution (for example, a case where the user notifies the provision (posting) of the image data on his/her own homepage, SNS, or the like, a case where the user notifies the provision (posting) of the image data on a dedicated advertisement site, or the like) will be described as an example.

The distribution server 10 acquires statistical information on information on the Internet related to the image data for printing to be distributed. As an example, in the present example, information on the number of posts (posting count) in which a hashtag related to the image data for printing to be distributed is attached is acquired in a specific SNS.

The distribution server 10 sets a content of a dispersion process at a time of the distribution, based on the acquired information on the posting count. In the present example, as the dispersion process, a process of sharpening the image IM displayed on the distribution request reception screen (see FIG. 14) over time is performed. The distribution server 10 sets the degree to which the image is sharpened over time, based on the information on the posting count. More specifically, a speed of sharpening the image is set (a time point (remaining time) at which the image is completely sharpened is set, a speed required to completely sharpen the image up to the set time point is calculated and set).

The user (artist) who is a provider of the image data acquires image data for distribution on the first terminal 100, inputs distribution information, and uploads (posts) the image data for distribution to the distribution server 10. The image data for distribution is acquired by imaging with the first terminal 100. Alternatively, the image is acquired by being captured by an external digital camera or the like and being taken into the first terminal 100.

In a case where the image data for distribution or the like is uploaded from the first terminal 100, the distribution server 10 performs a reception process of the image data or the like. The received image data or the like is recorded in the database 20.

In a case where the image data for distribution is received from the first terminal 100, the distribution server 10 performs a process (so-called a preparation process for distribution) necessary for distributing the received image data.

In addition, in a case where the image data for distribution is received from the first terminal 100, the distribution server 10 notifies the second terminal 200 of the specific user according to the setting of the distribution date and time of the image data. The notification is given to the user (fan) who follows the user (artist) who uploads the image data.

The second terminal 200 of the user (fan) who receives the notification displays a message on the screen to notify the user (fan) (see FIG. 13).

The user (fan) who checks the notification requests provision of the information on the image data for printing that can be distributed to the distribution server 10 via the second terminal 200. In response to this request, the distribution server 10 provides the information on the image data for printing that can be distributed to the second terminal 200 of the user (fan). The information on the image data for printing that can be distributed is provided to the user (fan) via the distribution request reception screen (see FIG. 14).

As illustrated in FIG. 14, in the distribution request reception screen, the image IM represented by the image data for printing that can be distributed is displayed in the predetermined display field FC16. The image IM is sharpened over time at a predetermined speed. More specifically, the image is sharpened at a speed set according to the posting count.

The user (fan) who desires to perform the distribution (printing) issues a distribution request to the distribution server 10 via the second terminal 200.

In a case where the distribution request is issued from the user (fan), the distribution server 10 performs a reception process of the distribution request. Specifically, the conditions such as the distribution period and the number of points owned are checked. In a case where the condition is satisfied, the request is approved. That is, downloading is permitted.

In a case where the download is permitted, the second terminal 200 downloads the image data for printing for which the distribution request is made. Then, the downloaded image data is printed by the printer 300.

The printer 300 prints the image data in response to a printing command from the second terminal 200. During printing, the second terminal 200 displays the screen (see FIG. 15) during printing on the display unit 204.

In a case where the printing is completed, the printer 300 notifies the second terminal 200 of the completion (printing completion). In a case where the notification of the printing completion is received, the second terminal 200 displays the screen of the printing completion on the display unit 204.

As described above, in the distribution system 1 of the present embodiment, in a case of presenting the image represented by the image data for printing that can be distributed to the user (fan), the image is sharpened over time. Then, the speed of the sharpening is set based on the information on the Internet related to the image. Therefore, even in a case where the distribution period is limited, the distribution request can be appropriately dispersed. Therefore, it is possible to suppress a situation (so-called saturation state) in which the distribution requests are concentrated in a specific period and the distribution server 10 cannot normally process the distribution requests.

### [Modification Examples]

### [Limitation of Number of Distributions]

The number of distributions may be set, and image data for printing may be distributed within a range of the set number of distributions. That is, the number of users (fans) who can print the distributed image data may be limited.

The number of distributions may be optionally set in a case where a user (artist) who provides image data for distribution uploads (posts) the image data, or may be set as a fixed value. That is, a configuration may be adopted in which the distribution is performed by limiting the number of distributions in the same manner as the distribution time.

In a case where the number of distributions is limited, the distribution requests may be concentrated immediately after the start of the distribution. As described above, the distribution system 1 according to the present embodiment can disperse the distribution requests, and thus, the present embodiment is particularly effective.

### [Information on Internet to Be Collected]

A type of information on the Internet to be collected for image data for printing to be distributed is not particularly limited. It is sufficient that the information is information that is useful for demand prediction. As described in the embodiment described above, by using the hashtag in the SNS, it is possible to efficiently collect the information useful for demand prediction.

In addition, as described above, the number of posts described for the image data for printing to be distributed may be counted and acquired as statistical information.

In addition, in a case where there is a Web page or the like that announces, advertises, or the like the image data for printing to be distributed, the number of accesses to the Web page or the like may be counted and acquired as the statistical information.

In addition, a configuration may be adopted in which information is collected from a plurality of information sources. Information may be individually collected from different SNSs. In addition, the information on the SNS and the information on the Web page may be collected together.

In a case where the information is collected from a plurality of information sources, a configuration may be adopted in which a weight is given to the statistical information obtained from each information source to obtain comprehensive statistical information. For example, in a case where information on the posting count is obtained from a plurality of SNSs, a configuration can be adopted in which a weight is set for each SNS to obtain information on comprehensive posting count.

### [Method of Adjusting Clearness of Image]

In the embodiment described above, a case where the blurring processing is performed on the image to adjust the clearness is described as an example, but the method of adjusting the clearness of the image is not limited thereto. In addition, for example, the clearness of the image may be adjusted by a process of changing a resolution of the image, mosaic processing, or the like. In addition, the clearness of the image may be adjusted by applying a transformation to the image. For example, a wavy deformation or a spiral deformation may be applied, and the clearness thereof may be adjusted. In this manner, various known methods can be adopted as the method of adjusting the clearness of the image. In addition, a plurality of these processes may be used in combination.

### [Method of Adjusting Degree of Image Sharpening]

In the embodiment described above, the speed of the image sharpening is adjusted to adjust the degree of image sharpening over time. However, a method of adjusting the degree of image sharpening over time is not limited thereto. For example, a configuration may be adopted in which the image is sharpened in stages, and the number of steps and/or the degree of sharpening in each step is adjusted. The number of steps is a setting of how many stages the image is divided to be sharpened.

### [Setting of Degree of Image Sharpening]

As described above, the degree of image sharpening over time is set based on the statistical information on the information on the Internet related to the image data, such as the posting count on the SNS related to the image data for printing to be distributed. This setting includes a case where the image is sharpened immediately after the start of the distribution. That is, a case where the image is displayed in a clear state (a state in which the blurring processing or the like is not performed) from the beginning is included. The case where the image is displayed in a clear state from the beginning is a case where the dispersion process is not performed or does not need to be performed. Therefore, the setting or determination based on the information collected by the relation information collection unit 10d also includes the setting or determination of necessity of the dispersion process.

### [Setting in Consideration of Information on User]

The degree of image sharpening over time may be set in consideration of information on a user (artist) who uploads the image. For example, the setting may be performed in consideration of the degree of popularity or the like of the user (artist). The degree of popularity is determined by, for example, the number of followers. For example, in a case where a speed of image sharpening is set according to the posting count, the speed set according to the number of followers may be corrected. Specifically, the correction is performed such that the speed is slower as the number of followers is larger. Therefore, the degree of image sharpening can be set more appropriately. The number of followers is an example of information on the user who provides the image data, and is an example of third information.

### [Correction of Degree of Image Sharpening]

The degree of image sharpening over time is basically set based on information obtained before a start of distribution. That is, a distribution period is set based on a demand prediction before the distribution. Meanwhile, the prediction may be incorrect. Therefore, in a case where the prediction is incorrect, it is preferable to correct the degree of sharpening over time.

For example, information on a distribution status of the image data (the order status of the printing) can be used for the correction of the degree of sharpening over time. Specifically, information on the number of distribution requests (the number of print orders) per unit time is acquired, and the degree of sharpening over time is dynamically corrected. For example, in a case where the degree of sharpening of the image is adjusted by changing a speed of the sharpening, in a case where the number of distribution requests per unit time is equal to or less than a threshold value Th1, correction of increasing the speed by a predetermined ratio is performed (correction of shortening a time for completely sharpening the image is performed). On the other hand, in a case where the number of distribution requests per unit time is equal to or greater than a threshold value Th2, correction of decreasing the speed by a predetermined ratio is performed (correction of increasing the time for completely sharpening is performed).

Therefore, the degree of image sharpening can be corrected according to the actual distribution status. Therefore, it is possible to more appropriately disperse the distribution request.

In the present example, the information on the number of distribution requests per unit time is an example of statistical information on the distribution status of the image data and is an example of second information.

In the present example, the configuration is adopted in which the degree of sharpening over time is corrected by using the information on the distribution status of the image data (the order state of the print), but the correction may be performed by using other information. For example, instead of or in addition to the information on the distribution status of the image data, information on the Internet obtained after the distribution starts (statistical information on the information on the Internet related to the image data) may be used for the correction.

### [Sharpening of Image]

As described above, in the present embodiment, the image (image represented by the image data for printing) displayed on the distribution request reception screen is sharpened over time. In a case where a user (fan) makes a distribution request (order for printing), the image to be displayed on the distribution request reception screen may be sharpened at a timing of making the distribution request. That is, in a case where the distribution request is made, the image may be sharpened at once such that the image can be checked.

### [Second Embodiment]

In the distribution system 1 of the first embodiment, the distribution requests are dispersed by sharpening an image (image represented by image data for printing) displayed on the distribution request reception screen over time.

In the present embodiment, the number of points required for a user (fan) to download the image data for printing (the number of points required for printing) is changed over time to disperse the distribution requests. That is, by adjusting the price (= number of points) over time, the distribution requests are dispersed.

Among the fans, there are fans who want to print any image regardless of the price as long as the image is an image of an artist and the like that the fan supports. On the other hand, there are fans who want to print depending on the price. Therefore, by adjusting the price (the number of points in the present embodiment) over time, it is possible to suppress the concentration of the distribution requests in a specific period.

A configuration is basically the same as the configuration of the distribution system 1 of the first embodiment, except that a dispersion process to be executed and a method of setting a content thereof is different. Therefore, only the dispersion process to be executed and the method of setting the content thereof will be described here. That is, only the function of the dispersion process content setting unit 10e will be described.

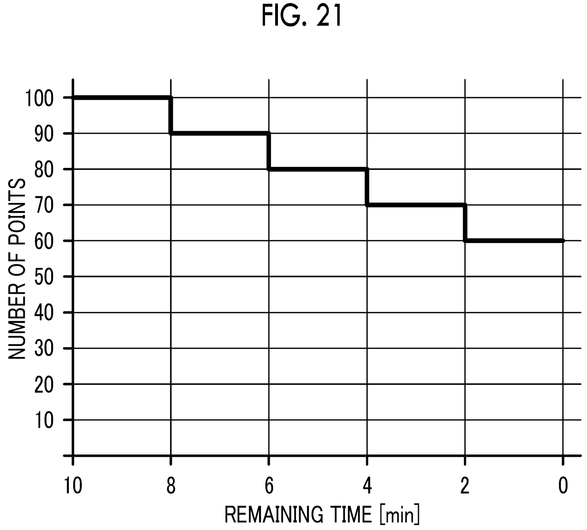

FIG. 21 is a conceptual diagram (graph) of a process of changing the number of points required for downloading (printing) over time.

In FIG. 21, a lateral axis represents a remaining time in which distribution is available, and a vertical axis represents the number of points required for downloading. FIG. 21 illustrates an example in a case where a distribution period is 10 minutes.

As illustrated in FIG. 21, the number of points required for downloading is decreased as the time elapses. FIG. 21 illustrates an example in which the number of points required for downloading is decreased at a certain ratio every certain time. Specifically, an example of a case where the number of points is decreased by a ratio of 10% every 2 minutes is illustrated. An initial value (the number of points at a start of the distribution) is set by a user, for example. FIG. 21 illustrates an example in a case where the initial value is 100 points.

The dispersion process content setting unit 10e sets the number of points required for downloading, based on information (statistical information) collected by the relation information collection unit 10d. As an example, in the present embodiment, the number of points required for downloading is decreased at a certain ratio every certain time, and the dispersion process content setting unit 10e sets the ratio to be decreased based on the information collected by the relation information collection unit 10d. For example, in a case where the relation information collection unit 10d collects information on the posting count, the ratio to be decreased is set according to the posting count. In this case, the ratio is decreased as the posting count is increased, and the ratio is increased as the posting count is decreased. Therefore, as the posting count is increased, a discount rate is decreased, and the number of points required is not decreased even though the remaining time is decreased. On the other hand, in a case where the posting count is small, the discount rate is increased, and the number of points required is decreased as the remaining time is decreased.

In this manner, in the present embodiment, the number of points required for downloading is set based on the statistical information (the posting count or the like) acquired for the image data for printing. Therefore, the distribution requests can be appropriately dispersed, and a situation in which the distribution requests are concentrated in a specific period and the distribution server 10 cannot normally process the distribution requests can be suppressed.

### [Modification Examples]

### [Setting of Number of Points (Price) Required for Downloading]

In the embodiment described above, the configuration is adopted in which the number of points required for downloading is decreased at a certain ratio every certain time, and the ratio to be decreased is set based on the statistical information such as the posting count. However, the method of setting the number of points required for downloading is not limited thereto.

For example, a configuration may be adopted in which the number of points required for downloading is decreased at a certain ratio every certain time, and the number of points at a start of distribution is set based on the acquired statistical information. In this case, for example, the number of points at the start of the distribution is set to be higher as the posting count is larger.

In addition, for example, a configuration may be adopted in which the number of points required for downloading is changed every certain period of time, and the number of points required for each period may be set based on the statistical information.

In addition, for example, a configuration may be adopted in which the number of points required for downloading is decreased at a certain ratio every certain time, the number of points at the start of distribution is set based on the acquired statistical information, and the ratio of decrease may be set. Further, a timing of changing the number of points required for downloading may be set.

### [Setting in Consideration of Information on User]

In the same manner as the modification example of the first embodiment described above, the number of points required for downloading may be set in consideration of the information (degree of popularity) of the user who uploads the image.

### [Correction of Number of Points Required for Downloading]

In the same manner as the modification example of the first embodiment described above, it is preferable to correct the set number of points after the start of the distribution, as necessary. That is, the set number of points can be corrected based on the distribution status of the image data (order status of printing). Specifically, information on the number of distribution requests (the number of print orders) per unit time is acquired, and the number of points required for downloading is dynamically corrected. For example, in a case where the number of distribution requests per unit time is equal to or less than the threshold value Th1, the correction of decreasing the number of points required at a predetermined ratio is performed (the correction of decreasing the price is performed). On the other hand, in a case where the number of distribution requests per unit time is equal to or greater than the threshold value Th2, the correction of increasing the number of points required at a predetermined ratio is performed (the correction of increasing the price is performed).

Therefore, the number of points required for downloading can be adjusted according to the actual distribution status. Therefore, it is possible to more appropriately disperse the distribution request.

### [Third Embodiment]

In the present embodiment, as the dispersion process, a process of expanding image data for printing to be distributed is performed to disperse distribution requests. "Expanding the image data for printing to be distributed" means increasing types of image data for printing to be distributed. That is, in the present embodiment, the number of types of image data that can be downloaded (printed) is increased to disperse the distribution requests. As the number of types of image data that can be downloaded is increased, the user (fan) has a wider range of selection of the image data to be downloaded. Therefore, a time until the actual distribution request is made is extended, and thus, the distribution requests are dispersed.

A configuration is basically the same as the configuration of the distribution system 1 of the first embodiment, except that a dispersion process to be executed and a method of setting a content thereof is different. Therefore, only the dispersion process to be executed and the method of setting the content thereof will be described here.

In the present embodiment, the dispersion process content setting unit 10e sets a content of expanding the image data for printing to be distributed, based on the information (statistical information) collected by the relation information collection unit 10d. For example, in a case of collecting information on the posting count, the relation information collection unit 10d sets the content of expanding the image data for printing to be distributed according to the posting count. In this case, as the posting count is increased, the number of types of image data for printing to be distributed is increased. The setting of the content includes a setting of necessity of the expansion.

As an example, in a case where the posting count is equal to or less than a threshold value, the dispersion process content setting unit 10e sets the type of image data for printing to be distributed to 1, and in a case where the posting count exceeds the threshold value, the dispersion process content setting unit 10e sets the type of image data for printing to be distributed to 2.

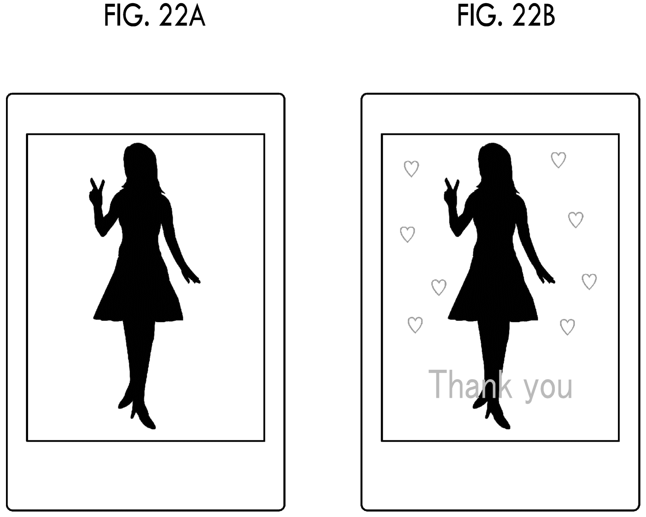

FIGS. 22A and 22B are diagrams illustrating an example of a method of expanding image data.

FIGS. 22A and 22B illustrate an example of a case where image data for printing to be distributed is expanded (the number of types is increased) by adding image editing to the basic image data.

FIG. 22A illustrates an example of a basic image. FIG. 22B is a diagram illustrating an example of an image in which image editing is added to the basic image.

In this manner, the type of image data for printing to be distributed can be increased by adding image editing to the basic image. For example, in the image editing, a message can be added by handwriting or a stamp can be added.

In a case where the posting count is equal to or less than a threshold value, the dispersion process content setting unit 10e distributes only the image data of the basic image. On the other hand, in a case where the posting count exceeds the threshold value, the image data of the basic image and the image data of the image to which the image editing is added are distributed.

In this manner, in the present embodiment, the image data to be distributed is expanded based on statistical information (the posting count or the like) acquired for the image data for printing. Therefore, the distribution requests can be dispersed, and a situation in which the distribution requests are concentrated in a specific period and the distribution server 10 cannot normally process the distribution requests can be suppressed.

In the present embodiment, since it is necessary to expand the image data for printing, the user (artist) who provides the image data for distribution needs to upload the required amount of image data in advance. In addition, it is preferable that the user (artist) sets a priority of the image to be provided at the uploading. That is, it is preferable that an order of increasing the image data for printing to be distributed can be set in a case where the image data for printing to be distributed is increased in stages.

### [Modification Examples]

### [Method of Expanding Image Data for Printing to Be Distributed]

The image data for printing to be distributed is basically expanded by increasing the type thereof. As described above, the method of increasing the number of types may be performed by increasing the number of types by adding image editing to the basic image data or increasing the image data itself. In addition, in a case where a plurality of pieces of image data for distribution are provided (uploaded) from the user (artist), an image (so-called collage image) in which a plurality of images are incorporated in one sheet may be generated, and the type of image data for printing to be distributed may be increased. In addition, in this case, the number of types of image data for printing to be distributed may be increased by changing the images to be combined.

### [Setting in Consideration of Information on User]

In the same manner as the modification example of the first embodiment, the content to be expanded may be set in consideration of the information (degree of popularity) of the user who uploads the image.

### [Correction of Content to Be Expanded]

In the same manner as the modification example of the first embodiment, the content to be expanded may be corrected as necessary after the start of the distribution. That is, the content to be expanded is corrected based on the distribution status of the image data (order state of printing). Specifically, information on the number of distribution requests (the number of print orders) per unit time is acquired, and the content to be expanded is dynamically corrected.

### [Fourth Embodiment]

In the present embodiment, as the dispersion process, a process of dispersing a process of receiving distribution requests is performed, and a scale-out process is performed. The scale-out refers to increasing the number of servers constituting a system to increase a processing capacity of the system.

Therefore, in the present embodiment, the number of servers that receive the distribution requests, that is, the number of distribution servers 10 is set based on information (statistical information) collected by the relation information collection unit 10d.

A configuration is basically the same as the configuration of the distribution system 1 of the first embodiment, except that a dispersion process to be executed and a method of setting a content thereof is different. Therefore, only the dispersion process to be executed and the method of setting the content thereof will be described here.

In the present embodiment, the dispersion process content setting unit 10e sets the number of distribution servers 10 that receive the distribution requests, based on the information (statistical information) collected by the relation information collection unit 10d. For example, in a case where the relation information collection unit 10d collects information on the posting count, the dispersion process content setting unit 10e sets the number of distribution servers 10 according to the posting count. In this case, the number of distribution servers 10 is increased as the posting count is increased. Therefore, it is possible to increase the processing capacity of the system and to suppress a situation (so-called saturation state) in which the distribution request cannot be normally processed.

### [Modification Examples]

In the same manner as the modification example of the first embodiment, the number of distribution servers 10 may be set in consideration of the information (degree of popularity) of the user who uploads the image.

A configuration may be adopted in which a scale-up process is performed instead of the scale-out process or in addition to the scale-out process. The scale-up refers to increasing a processing capacity of a server by enhancing a processor, a memory, and the like of the server in order to improve performance of a system. In a case where the scale-up process is performed, the server to be used is switched based on information such as the posting count. For example, in a case where the posting count or the like is large, a configuration is adopted in which the server is switched to a server having high processing capacity.

### [Other Embodiments]

### [Switching of Server According to Attribute of User Who Issues Distribution Request]

A configuration may be adopted in which a server that receives a distribution request or performs a distribution process (download process) is switched according to an attribute of a user (fan) who issues the distribution request. For example, the server can be switched depending on whether or not the user is a paid-up member. In addition, for example, in a case where the user is ranked according to the number of downloads (prints) or the like, the server can be switched according to the rank of the user.

### [Combinations]

The configurations of each of the embodiments described above can be used in combination as appropriate. The process of changing the clearness of the image over time and the process of changing the number of points required for downloading over time can be used in combination. In addition, the process of changing the clearness of the image over time and the scale-out process can be used in combination.

### [Printing of Image]

In the embodiments described above, the downloaded image data is immediately printed by the printer 300, but the image data may be printed after a lapse of time. That is, the process of downloading and the process of printing may be separately performed.

### [Payment]

In the embodiment described above, the image data for printing is downloaded (printed) by payment (consuming the points), but the application of the present invention is not limited thereto. This can also be applied to a case of downloading for free (except for the configuration of the second embodiment).

### [System Configuration]

The first terminal 100 and the second terminal 200 may be computers that can communicate with the distribution server 10 via the network 2. Therefore, a mobile computer is not necessarily required.

In addition, in the embodiment described above, a case where a printer that prints an image on an instant film is used as the printer 300 is described as an example, but a type of printer 300 is not limited thereto. In addition, for example, a printer that prints an image on a recording medium by an ink jet method, a heat-sensitive method, or the like can also be used. In addition, the printer 300 does not necessarily have to be a portable printer, and a so-called stationary type printer may be used.

In addition, a connection manner between the printer 300 and the second terminal 200 may be wired or wireless.

### [Hardware Configuration of Distribution Server]

The function of the distribution server is realized by various processors. The various types of processors include a CPU and/or a graphic processing unit (GPU), which is a general-purpose processor that executes a program to function as the various processing units, a programmable logic device (PLD), which is a processor of which a circuit configuration can be changed after manufacture, such as a field programmable gate array (FPGA), and a dedicated electric circuit, which is a processor having a circuit configuration that is designed for dedicated use in order to perform specific processing, such as an application specific integrated circuit (ASIC). The program is synonymous with software.

One processing unit may be configured with one of the various types of processors or may be configured with two or more processors of the same type or different types. For example, one processing unit may be configured with a plurality of FPGAs or a combination of a CPU and an FPGA. In addition, one processor may constitute a plurality of processing units. As an example in which a plurality of processing units constitute one processor, first, there is a form in which one processor is configured with a combination of one or more CPUs and software as typified by a computer used in a client, a server, or the like, and this processor functions as the plurality of processing units. Second, there is a form in which a processor that realizes functions of an entire system including the plurality of processing units with one integrated circuit (IC) chip is used, as typified by a system on chip (SoC) or the like. In this manner, the various processing units are configured by using one or more of the various processors as the hardware structure.

In addition, the function of the distribution server can also be realized by a so-called cloud computer.

### Explanation of References

1: distribution system
2: network
10: distribution server
10a: image data reception processing unit
10b: image data recording processing unit
10c: distribution processing unit
10d: relation information collection unit
10e: dispersion process content setting unit
11: processor
12: main storage unit
13: auxiliary storage unit
14: operation unit
15: display unit
16: interface unit
20: database
31: button
100: first terminal
100a: image data acquisition processing unit
100b: distribution information acquisition processing unit
100c: upload processing unit
101: processor
102: main storage unit
103: auxiliary storage unit
104: display unit
105: operation unit
106: GPS reception unit
107: camera unit
108: voice input unit
109: voice output unit
110: communication unit
111: short range wireless communication unit
112: sensor unit
200: second terminal
200a: information provision processing unit
200b: distribution request processing unit
200c: download processing unit
200d: printing processing unit
201: processor
202: main storage unit
203: auxiliary storage unit
204: display unit
205: operation unit
206: GPS reception unit
207: camera unit
208: voice input unit
209: voice output unit
210: communication unit
211: short range wireless communication unit
212: sensor unit
300: printer
301: control unit
302: printing unit
302a: film loading chamber
302b: film feeding mechanism
302c: film transport mechanism
302d: print head
303: short range wireless communication unit
304: operation unit
310: film pack
F1: frame
F2: frame
F3: frame
FB11: profile button
FB12: print button
FB21: album button
FC11: display field for information on user who distributes
FC12: display field for profile image of user who distributes
FC13: display field for information on number of distributions and number of followers of user who distributes
FC14: display field for message posted by user who distributes
FC15: display field for distribution period
FC16: display field for image during distribution
FC17: display field for comment
FC21: display field for information on distribution period
FC22: display field for printed image
FC23: display field for reaction button
FC24: display field for information on user who distributes
FC25: display field for comment
IB11: button
IB21: button
IB22: button
IB23: button
IB32: button
IB41: button
IC11: display field for image to be distributed
IC12: input field for color information
IC13: input field for comment
IC14: input field for distribution date and time
IC15: input field for distribution point
IM: image represented by image data for printing
IM2: image
IM4: image
IM6: image
IM8: image
IM10: image
LA1: animation
P1: artist
P2: fan
PM1: message indicating that printing is in progress
PM2: message indicating printing completion
PN: message for notification

## Claims

1. An image data distribution apparatus that receives a distribution request from a terminal and distributes image data for printing to the terminal, the image data distribution apparatus comprising a processor,
wherein the processor is configured to:
acquire first information including statistical information on information on Internet related to the image data; and
set a content of a dispersion process, based on the first information.

2. The image data distribution apparatus according to claim 1,
wherein the first information includes statistical information on information on a social networking service related to the image data and/or statistical information on an access to a Web page on which information related to the image data is posted.

3. The image data distribution apparatus according to claim 1 or 2,
wherein the dispersion process is a process of dispersing the distribution request.

4. The image data distribution apparatus according to claim 3,
wherein the dispersion process is a process of sharpening an image represented by the image data over time and displaying the image on a display unit of the terminal, and
the processor is configured to set a degree of sharpening of the image over time, based on the first information.

5. The image data distribution apparatus according to claim 4,
wherein the processor is configured to:
acquire second information including statistical information on a distribution status of the image data; and
correct the degree of sharpening of the image over time, based on the second information.

6. The image data distribution apparatus according to claim 4,
wherein in a case where the image is sharpened in stages,
the processor is configured to set the number of steps for sharpening and/or a degree of sharpening in each step, based on the first information.

7. The image data distribution apparatus according to claim 4,
wherein the processor is configured to:
acquire third information including information on a user who provides the image data; and
correct the degree of sharpening of the image over time, based on the third information.

8. The image data distribution apparatus according to claim 3,
wherein the dispersion process is a process of changing a price of the image data over time, and
the processor is configured to set the price, based on the first information.

9. The image data distribution apparatus according to claim 8,
wherein the processor is configured to:
acquire second information including statistical information on a distribution status of the image data; and
correct the price, based on the second information.

10. The image data distribution apparatus according to claim 3,
wherein the dispersion process is a process of expanding the image data to be distributed, and
the processor is configured to set a content to be expanded, based on the first information.

11. The image data distribution apparatus according to claim 1 or 2,
wherein the dispersion process is a process of dispersing a process of receiving the distribution request.

12. The image data distribution apparatus according to claim 11,
wherein the dispersion process is a scale-out process, and
the processor is configured to set a content of the scale-out process, based on the first information.

13. The image data distribution apparatus according to claim 3,
wherein a printable period of the image data is limited.

14. The image data distribution apparatus according to claim 3,
wherein the number of distributions of the image data is limited.

15. An image data distribution method for receiving a distribution request from a terminal and distributing image data for printing to the terminal, the image data distribution method comprising:
acquiring first information including statistical information on information on Internet related to the image data; and
setting a content of a dispersion process, based on the first information.

16. An image data distribution program for receiving a distribution request from a terminal and distributing image data for printing to the terminal, the image data distribution program causing a computer to realize:
a function of acquiring first information including statistical information on information on Internet related to the image data; and
a function of setting a content of a dispersion process, based on the first information.

17. A non-transitory computer-readable recording medium on which the program according to claim 16 is recorded.
